# EUROPEAN PATENT APPLICATION

(11) **EP 0 715 984 A1**
(43) Date of publication of application: **12.06.1996**
(21) Application number: 95203414.8
(22) Date of filing: 08.12.1995
(51) Int. Cl.: B60L 8/00

(54) **Wave-motion electric generating apparatus**

(30) Priority: 09.12.1994 JP 331669/94
(71) Applicant: Yugen Kaisha Fox Head, Misato-shi, Saitama-ken 341 (JP)
(72) Inventor: Takubo, Masaru, Misato-shi, Saitama-ken 341 (JP)
(74) Representative: 't Jong, Bastiaan Jacobus

(57) **Abstract**

A fluid pressure cylinder mounted between a vehicle body and a suspension of an automobile is operated to produce pressurized fluid by vertical motions of the vehicle body, and the pressurized fluid is fed to a fluid pressure motor to rotate the same. A generator coupled to the fluid pressure motor is driven by the fluid pressure motor to generate electric power.

## Description

### BACKGROUND OF THE INVENTION

### Field of the Invention

The present invention relates to a wave-motion electric generating apparatus which utilizes a vertical motion of a vehicle body generated during running of an automobile, and in particular, to a wave-motion electric generating apparatus which improves a running performance of an electric automobile which is driven by motive power provided by a battery.

### Description of the Prior Art

Recently, research and development, and trial manufacture of an electric automobile have been conducted extensively owing to a progress in a semiconductor technique and electronic technique due to the fact that the electric automobile obviates a problem of public nuisance such as exhaust gas and noises which are caused by an internal combustion engine. A prime mover of the electric automobile, as compared with an internal combustion engine, is small in size and is simple in structure, and furthermore, since it has no reciprocating part such as a piston, the rotation is smooth and a quiet operation can be performed. Moreover, the regulation of output can be performed by controlling the electric power from a battery, and supplying the controlled electric power to an electric motor. As a result, it is simple as compared with the internal combustion engine in which the amount of mixture gas supplied to a cylinder is adjusted by opening and closing a throttle valve. However, in the electric automobile, the running performance is determined by the battery which provides motive power. In particular, the battery is required to provide a long running distance per one time of charge, and to enable to draw large electic power instantly so as to provide a good acceleration performance.

However, the prior art electric automobiles involve a drawback in which although a generator is also mounted, the electric power generated by the generator is not so large, and the capacity of the battery is always insufficient, and the running distance cannot be extended. Furthermore, in order to ensure a required running distance, at least ten batteries each having its own weight of 30 kg are mounted to reach a total weight of 300 kg, and thus, there is another drawback in which the weight of the vehicle body is increased rather as compared with gasoline automobiles.

### SUMMARY OF THE INVENTION

In view of the above-mentioned situation, it is an object of the present invention to provide a wave-motion electric generating apparatus which enables to resolve the insufficient battery capacity, and to extend the running distance.

Another object of the present invention is to provide a wave-motion electric generating apparatus which enables to to reduce the number of batteries to be mounted, and to reduce the weight of the vehicle body.

Still another object of the present invention is to provide a wave-motion electric generating apparatus which is useful when it is mounted on a gasoline automobile to reduce a load of the internal combustion engine.

In order to achieve the above-mentioned objects, in a first aspect of the present invention, a wave-motion electric generating apparatus comprises a fluid pressure cylinder operated by a vertical motion of a vehicle body, a fluid pressure motor coupled to a fluid outlet side of the fluid pressure cylinder, a generator driven by motive power of the fluid pressure motor, and a fluid circulating path connecting a fluid outlet side of the fluid pressure motor to a fluid inlet side of the fluid pressure cylinder.

In a second aspect of the present invention, the fluid pressure cylinder is mounted between the vehicle body and a suspension so that the fluid pressure cylinder is effectively operated by the vertical motion of the vehicle body.

In a third aspect of the present invention, a unidirectional valve is provided at each of a fluid outlet side and a fluid inlet side of the fluid pressure cylinder so that a pressure sending operation and a suction operation of the fluid pressure cylinder can be performed reliably.

In a fourth aspect of the present invention, a fluid pressure adjusting tank and a unidirectional pressure valve are provided at a fluid inlet side of the fluid pressure motor so that a pressure of fluid supplied to the fluid pressure motor is constant.

In a fifth aspect of the present invention, a fluid storage tank is provided in a midway of the fluid circulating path so that a required amount of fluid is always maintained.

In the present invention, the fluid pressure motor coupled with the fluid outlet side of the fluid pressure cylinder is rotated by the vertical motion of the vehicle body, and electric energy is taken out from the generator which is driven by the motive power of the fluid pressure motor. As a result, since the energy of fuel such as foscil fuel is not required, and the atmosphere is not contaminated and maintained clean. In this case, the fluid used to rotate the fluid pressure motor is circulated through the fluid circulating path coupled between the fluid outlet side of the fluid pressure motor and the fluid inlet side of the fluid pressure cylinder.

It is effective when the fluid pressure cylinder is interposed directly or through a link between the vehicle body and the suspension. Specifically, the suspension supports the weight of the vehicle body, and moderates the vertical motions or vibrations due to irregularities of a road surface to make feel comportable, and it is possible to effectively take out the weight, vibrations, acceleration or the like of the vehicle body as a fluid pressure. In this case, as a measure for moderating a surging phenomenon, it is effective when the fluid pressure adjusting tank is provided at the fluid inlet side of the fluid pressure motor, and a relief valve and a unidirectional pressure valve are provided, and furthermore, a fluid storage tank is provided in a midway of the fluid circulating path.

The present invention provides the following advantages.

In the present invention, since the fluid pressure motor coupled to the fluid outlet side of the fluid pressure cylinder is rotated by the fluid pressure produced by the vertical motion of the vehicle body, and the electric energy is taken out by operating the generator by the motive power of the fluid pressure motor, the atmosphere is not contaminated and maintained clean. Furthermore, when the generator is mounted on an electric automobile, it is possible to extend the running distance by resolving the insufficient capacity of the battery, and to reduce the number of batteries to be mounted thereby to reduce the weight of the vehicle body. In addition, when the generator is mounted on a gasoline automobile, a generator which requires motive power from the internal combustion engine becomes unnecessary, and the load of the internal combustion engine can be reduced.

In the second aspect of the invention, since the fluid pressure cylinder is interposed directly or through a link between the vehicle body and the suspension, the function of the suspension to support the weight of the vehicle body and to moderate the vertical vibrations due to irregularities of a road surface is aided or improved, and at the same time, the weight of the vehicle body can be effectively taken out as the fluid pressure.

In the third aspect of the invention, since the unidirectional valve is provided at each of the fluid outlet side and the inlet side of the fluid pressure cylinder, the pressure sending operation and the suction operation of the fluid pressure cylinder can be performed reliably.

In the fourth aspect of the invention, since the fluid pressure adjusting tank and the unidirectional pressure valve are provided at the fluid inlet side of the fluid pressure motor, the pressure of the fluid supplied to the fluid pressure motor is maintained constant, and the surging phenomenon can be moderated.

In the fifth aspect of the invention, since the fluid storage tank is provide at a midway of the fluid circulating path, the required amount of fluid can be reliably ensured.

### BRIEF DESCRIPTION OF THE DRAWINGS

Fig. 1 is a schematic diagram of a wave-motion electric generating apparatus of the present invention together with a fluid path.

Fig. 2 is a perspective view showing a mounting state of the fluid pressure cylinder in Fig. 1.

Fig. 3 is a side view showing positional relationships among a vehicle body and a suspension and the fluid pressure cylinder.

Fig. 4 is a schematic diagram useful to explain the principle of operation of the fluid pressure cylinder.

### DESCRIPTION OF A PREFERRED EMBODIMENT

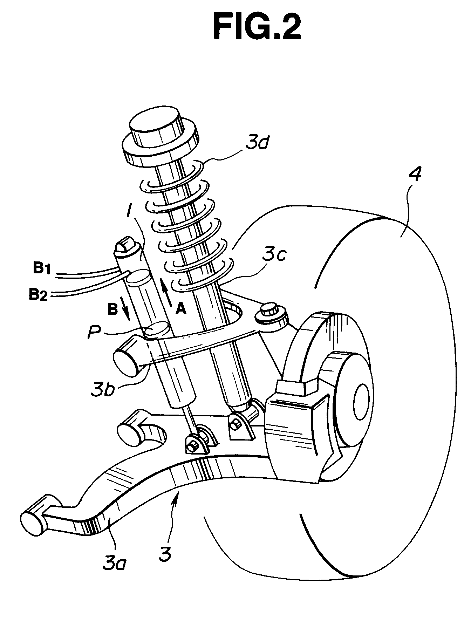

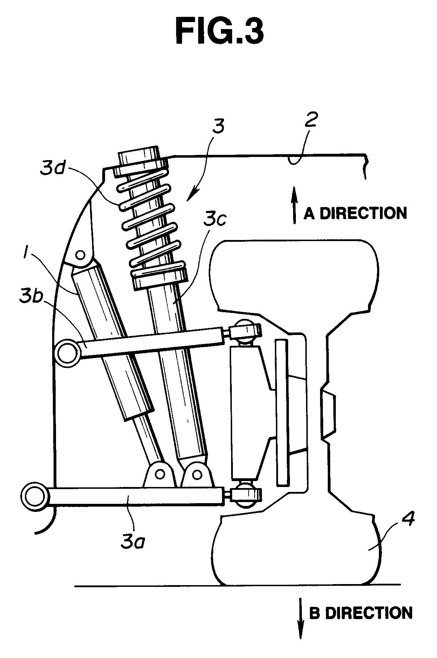

With reference to the drawings, a fluid pressure cylinder 1 operated by an oil pressure, pneumatic pressure, or the like is mounted interposed between a vehicle body 2 and a lower arm 3a of a suspension 3 as shown in Figs. 2 and 3. In the figures, the suspension 3 supports a wheel 4 with two oscillation arms of the lower arm 3a and an upper arm 3b extending laterally, and a shock absorber 3c and a coil spring 3d are mounted between the vehicle body 2 and the lower arm 3a. However, the suspension 3 is not limited to the structure shown in Figs. 2 and 3.

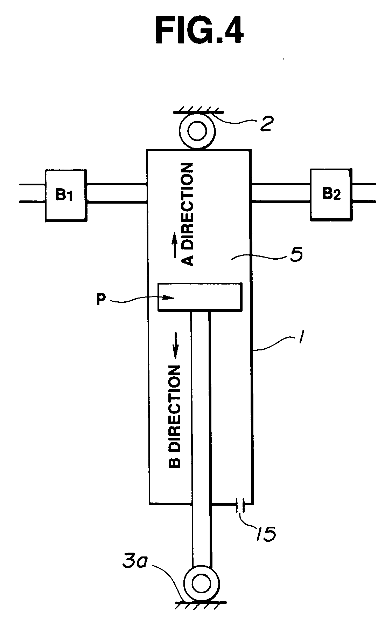

As shown in Fig. 4, the cylinder 1 has a pressurizing chamber 5, and unidirectional valves B1 and B2 are respectively provided at a fluid inlet side and outlet side of the pressurizing chamber 5. Owing to the provision of these unidirectional valves B1 and B2, a pressure sending operation and a suction operation of the pressurizing chamber 5 can be reliably performed. Furthermore, it is natural that the unidirectional valves B1 and B2 function as a shock absorber by changing a cranking pressure of the valves B1 and B2.

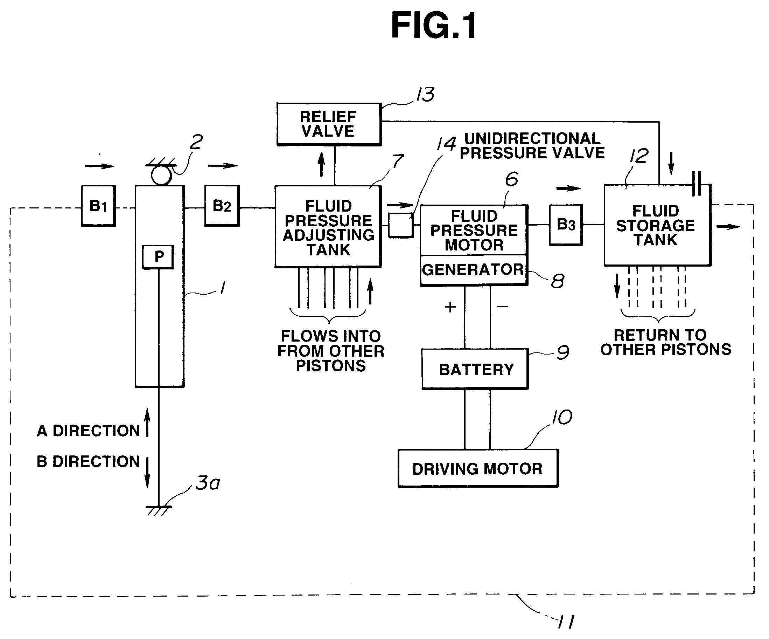

With reference to Fig. 1, a fluid pressure motor (turbine) 6 is coupled to the fluid outlet side of the cylinder 1 through a fluid pressure adjusting tank 7 and a unidirectional pressure valve 14, and the fluid pressure motor 6 serves as a driving source of a generator 8. Assuming that an amount of fluid, e.g., an amount of oil required for one revolution of the fluid pressure motor 6 is 19 cc/rev , in order to achieve a rotational speed of 2000 to 3000 rpm of the fluid pressure motor 6, it is necessary that a pressure of fluid supplied from the cylinder 1 is 70 kgf/cm² . In order to obtain this pressure, a smaller diameter of the cylinder 1 is advantageous.

The fluid pressure adjusting tank 7 adjusts the pressure of fluid supplied from the cylinder 1 to a constant pressure, and then supplies to the fluid pressure motor 6 so that the fluid adjusting tank 7 functions as an accumulator. The electric power generated by the generator 8 is stored in a battery 9, and the battery 9 is used as a power supply for a driving motor 10.

The battery 9 serves as the power supply for the driving motor 10 in the case of an electric automobile, however, in the case of a gasoline automobile, the battery 9 serves as a power supply for a lighting system including a head lamp and the like, and for a starter and the like. In other words, in the case of the gasoline automobile, there is a possibility that a generator utilizing motive power of the internal combustion engine becomes unnecessary, and thus, an advantage is offered in which the load of the internal combustion engine can be reduced.

A unidirectional valve B3 is provided at a fluid outlet side of the fluid pressure motor 6, and at the same time, a fluid storage tank 12 is provided at a midway of a fluid circulating path 11 which couples the fluid outlet side of the fluid pressure motor 6 to the fluid inlet side of the cylinder 1. The unidirectional valve B3 prevents reverse flow of the fluid towards the fluid pressure motor 6, that is, prevents reverse revolution of the fluid pressure motor 6.

A relief valve 13 is coupled to the fluid pressure adjusting tank 7 to supply fluid to the fluid storage tank 12 when the fluid pressure in the fluid pressure adjusting tank 7 becomes a high pressure exceeding a limit pressure, and this relief valve 13 is effective in preventing a surging phenomenon. An air hole 15 is formed at a bottom wall of the cylinder 1 (Fig. 1).

In the embodiment described above, as shown in Figs. 2 and 3, when the wheel 4 moves in a direction B due to the coil spring 3d during actual running, a piston P in the fluid pressure cylinder 1 is operated in the direction B as shown in Figs. 2 and 4. As a result, the pressurizing chamber 5 of the cylinder 1 becomes a negative pressure. On the other hand, the fluid flows into the pressurizing chamber 5 from the fluid storage tank 12 through the unidirectional valve B1. At this time, the unidirectional valve B2 is maintained still in a closed state.

Subsequently, when the wheel 4 returns to a direction A, the fluid in the pressurizing chamber 5 is pressurized by the piston P, and then the pressurized fluid is supplied to the fluid adjusting tank 7 through the unidirectional valve B2. As a result, the fluid in the fluid adjusting tank 7 is also pressurized, and the pressurized fluid is supplied to the fluid pressure motor (turbine) 6 through a unidirectional pressure valve 14 to rotate the motor (turbine) 6. Thus, the generator 8 coupled with the motor (turbine) 6 is driven to generate electric energy.

As described above, the fluid pressure cylinder 1 associated with each wheel 4 feeds the pressurized fluid to the fluid adjusting tank 7 by virtue of the vertical motions or vibrations of the vehicle body 2. Since the fluid adjusting tank 7 is coupled to the other fluid pressure cylinders 1 respectively associated with the other wheels 4, the pressurized fluid from each of the cylinders 1 is accumulated in the fluid adjusting tank 7, and the pressurized fluid, after pressure adjustment, is incessantly fed to the fluid pressure motor (turbine) 6 to drive the generator 8 so that the generator 8 continues the generation of the electric energy. Likewise, the fluid storage tank 12 is coupled to the other cylinders 1.

## Claims

1. A wave-motion electric generating apparatus comprising a fluid pressure cylinder operated by a vertical motion of a vehicle body, a fluid pressure motor coupled to a fluid outlet side of the fluid pressure cylinder, a generator driven by motive power of the fluid pressure motor, and a fluid circulating path connecting a fluid outlet side of the fluid pressure motor to a fluid inlet side of the fluid pressure cylinder.

2. A wave-motion electric generating apparatus according to claim 1, wherein the fluid pressure cylinder is interposed directly or through a link between the vehicle body and a suspension.

3. A wave-motion electric generating apparatus according to claim 1 or 2, wherein a unidirectional valve is provided at each of a fluid outlet side and a fluid inlet side of the fluid pressure cylinder.

4. A wave-motion electric generating apparatus according to any one of claims 1 to 3, wherein a fluid pressure adjusting tank and a unidirectional pressure valve are provided at a fluid inlet side of the fluid pressure motor.

5. A wave-motion electric generating apparatus according to any one of claims 1 to 4, wherein a fluid storage tank is provided in a midway of the fluid circulating path.
